Europäisches Patentamt

European Patent Office

Office européen des brevets

(19)

(11) Numéro de publication: **0 198 329**

**A1**

(12) **DEMANDE DE BREVET EUROPEEN**

(21) Numéro de dépôt: **86104501.1**

(22) Date de dépôt: **02.04.86**

(51) Int. Cl.⁴: **A22B 7/00**

(30) Priorité: **10.04.85 FR 8505397**

(43) Date de publication de la demande:
**22.10.86 Bulletin  86/43**

(84) Etats contractants désignés:
**AT BE CH DE GB IT LI LU NL SE**

(71) Demandeur: **BOCAVIANDE CHIRON**
**1 Place des Prairies**
**F-49301 Cholet(FR)**

(72) Inventeur: **Soullard, Marcel**
**L'Oseraie Route de Trèmentines**
**F-49300 Cholet(FR)**
Inventeur: **Brochard, Victor**
**79 Rue de L'Yser**
**F-49300 Cholet(FR)**

(74) Mandataire: **Casalonga, Axel et al**
**BUREAU D.A. CASALONGA OFFICE JOSSE &**
**PETIT Morassistrasse 8**
**D-8000 München 5(DE)**

(54) **Procédé et installation de traitement de quartiers de viande de bovins ou autres quadrupèdes.**

(57) L'installation comprend un premier poste (2) présentant une portion de rail pivotante (11) pouvant occuper une position basse dans laquelle un crochet avant (16a) peut être accroché à l'extrémité inférieure du quartier (15) suspendu verticalement par un crochet arrière (16b) et une position haute inclinée par rapport à l'horizontale, le mouvement étant commandé par un câble (21) et un vérin (22); un deuxième poste (3) présentant des moyens d'extension, comprenant notamment deux vérins d'extension (27,28) pouvant subir un mouvement de pivotement préalable sous l'action d'un vérin de levage - (29). Les deux vérins d'extension sont capables d'agir directement sur les crochets avant et arrière, mettant ainsi le quartier en position d'extension horizontale en vue des traitements nécessaires.

Le troisième poste (4) comprend les mêmes moyens d'extension (31, 32,33). De plus, une portion de rail (7a) peut subit, sous l'action des deux vérins de soulèvement (34,35) une translation verticale ainsi qu'un pivotement. Le quartier peut ainsi être évacué par gravité jusqu'au rail d'évacuation (9).

L'installation permet de pratiquer la quasi totalité des opérations de dégraissage et d'apprêtage du quartier dans les meilleures conditions de travail et de manière semi-automatique.

FIG.2

Procédé et installation de traitement de quartiers de viande de bovins ou autres quadrupèdes.

La présente invention a pour objet un procédé et une installation permettant le traitement de quartiers avant ou arrière de viande de bovins ou autres quadrupèdes qui se présentent initialement suspendus verticalement par un crochet pouvant se déplacer sur un assemblage de rails aériens devant une pluralité de postes de travail successifs. Le traitement auquel il peut être procédé est par exemple constitué par une succession d'opérations manuelles de dégraissage et d'apprêtage du quartier suspendu, l'ensemble étant connu sous le nom d'opérations de parage. Après exécution de ces différentes opérations, le quartier peut être convoyé jusqu'à d'autres postes où il subit les opérations classiques de désossage manuel et de prélèvement des muscles.

Jusqu'à présent, les différentes opérations de traitement sur les quar` tiers avant ou arrière de bovins nécessitent de la part des opérateurs des efforts non négligeables, les quartiers devant plusieurs fois être retournés sur une table de travail pour permettre le décollage de certaines parties du quartier, le désossage et ensuite le parage par dégraissage des muscles.

Si l'on considère à titre d'ememple le travail manuel effectué sur un quartier avant de bovin, simplement suspendu verticalement par un crochet et non maintenu, ce travail consistait jusqu'à présent, à découper le quartier avant en trois morceaux séparés, à savoir le caparaçon, l'épaule et le collier avec les basses côtes. Cette opération de découpage nécessitait des efforts importants pour l'opérateur, compte tenu de l'absence de maintien du quartier suspendu et de la position peu favorable qu'il devait adopter pour certaines découpes. On procédait ensuite au désossage manuel de chaque morceau ainsi découpé. Enfin, dans une dernière opération, on procédait au dégraissage et au parage manuels de chaque muscle individuel. Toutes ces opérations effectuées successivement sur des tables de travail nécessitaient chaque fois des efforts relativement importants pour retourner les morceaux, les déplacer, etc. Compte tenu de ce procédé de travail, les opérations devaient se faire principalement au couteau et il n'était pas pratique de bénéficier d'outils plus rapides tels que les couteaux mécaniques à lame circulaire.

Les mêmes remarques peuvent être faites en ce qui concerne le travail sur un quartier arrière de bovin.

La présente invention a donc pour objet un procédé et une installation qui permettent de diminuer considérablement les efforts nécessaires pour effectuer ces traitements tout en accélérant sensiblement la vitesse grâce à une automatisation et un maintien du quartier facilitant largement le travail de l'opérateur.

L'invention a également pour objet un procédé et une installation qui permettent le traitement de quartiers de bovins ou autres quadrupèdes maintenus en extension de façon à faciliter le travail manuel effectué sur le quartier.

Un autre objet de l'invention est de prévoir une installation de traitement qui permette d'exercer une extension sur les quartiers suspendus sur un assemblage de rails aériens sans qu'il soit nécessaire de prendre appui directement sur le quartier à traiter.

L'invention a également pour objet un procédé et une installation qui permettent aux opérateurs, de travailler sur les quartiers maintenus en position inclinée ou horizontale, permettant ainsi un travail ergonomique économisant les mouvements et favorisant en outre la qualité du travail en raison de la stabilité du quartier à traiter.

Le procédé de traitement de l'invention s'applique à des quartiers avant ou arrière de bovins ou autres quadrupèdes suspendus verticalement par un crochet, lesquels peuvent se déplacer sur un assemblage de rails aériens devant une pluralité de postes de travail successifs. Le procédé de l'invention comprend les étapes suivantes : on effectue éventuellement un traitement préalable sur le quartier suspendu verticalement par un premier crochet mobile. On fait ensuite passer le quartier de sa position verticale initiale à une position inclinée par rapport à l'horizontale en utilisant un deuxième crochet mobile et on effectue un premier traitement sur le quartier maintenu bloqué dans cette position par le premier crochet et subissant une extension entre ses deux extémités par l'effet de la gravité. On libère ensuite le premier crochet, ce qui permet le déplacement du quartier par gravité, par entraînment manuel ou par entraînement mécanisé jusqu'au poste suivant où le quartier se trouve en position horizontale. On provoque alors une extension du quartier en position horizontale en agissant sur les deux crochets sans toucher à la viande et on effectue ensuite un deuxième trai tement sur le quartier ainsi maintenu et bloqué dans cette position. Après avoir relaché l'extension, on déplace éventuellement, par entraînement manuel ou mécanisé, le quartier toujours en position horizontale vers un ou plusieurs postes de traitement ultérieur.

Dans une variante préférée, au dernier poste de traitement, après extension du quartier en position horizontale, obtenue par action sur les deux crochets sans toucher à la viande, on effectue un traitement final pouvant comprendre la découpe du quartier en au moins deux portions. On peut alors accrocher les deux portions sur le même crochet ou maintenir chaque portion sur son propre crochet et l'évacuation de l'ensemble est assurée par gravité, par entraînement manuel ou par entraînement mécanisé.

Le passage du quartier de sa position verticale initiale à sa position inclinée par rapport à l'horizontale, au premier poste de traitement , déclenche de préférence une temporisation pour la durée du premier traitement et peut commander la cadence de l'ensemble des traitements ultérieurs. Selon une autre variante, chaque traitement comporte une temporisation propre indépendante de celle des autres traitements et déclenchée par l'arrivée du quartier au poste considéré.

L'installation de traitement de quartiers avant ou arrière de viande de bovins ou autres quadrupèdes selon l'invention permet la mise en oeuvre du procédé de l'invention. L'installation comprend un assemblage de rails aériens à deux chemins de roulement parallèles sur lesquels peuvent se déplacer des crochets mobiles devant une pluralité de postes de travail successifs. L'installation de l'invention comporte au moins un poste de travail présentant des moyens d'extension capables d'agir directement sur les crochets avant et arrière sans toucher la viande.

Dans un mode de réalisation préféré, l'installation comprend également un premier poste présentant une portion de rail pivotante pouvant occuper une position basse dans laquelle un crochet avant se trouvant maintenu sur ladite portion de rail peut être accroché à l'extrémité inférieure du quartier suspendu verticalement par un crochet arrière, et une position haute inclinée par rapport à l'horizontale.

L'installation comporte également de préférence au moins un poste final présentant une portion de rail pouvant subir une translation verticale et un pivotement ainsi que des moyens d'extension capables d'agir directement sur les crochets avant et arrière se trouvant sur ladite portion de rail sans toucher la viande.

Le rail aérien sur lequel peuvent se déplacer les crochets devant le poste comportant les moyens d'extension et les postes suivants, est placé à un niveau inférieur à celui du rail par lequel les quartiers sont amenés à l'installation et à celui du rail par lequel les quartiers sont évacués de l'installation. La portion de rail pivotante du premier poste permet au quartier de passer par gravité du niveau haut au niveau bas. La portion de rail pouvant subir une translation verticale au poste final permet également, dans sa position haute, de faire passer par gravité le quartier traité du niveau bas au niveau haut.

Dans un mode de réalisation préféré de l'installation de l'invention, les moyens d'extension utilisés pour maintenir le quartier lors de certains traitements, comprennent une tête de centrage mobile verticalement entre une position haute et une position basse. Dans la position basse, un ergot de centrage solidaire de la tête de centrage vient s'engager entre les deux chemins de roulement du rail aérien. Deux vérins d'extension sont disposés de part et d'autres du rail. Chaque vérin comporte un cylindre articulé en un point fixe situé au niveau du rail et une tige articulée sur la tête de centrage. L'extrémité de la tige est munie d'une pièce d'appui capable d'exercer une poussée sur l'un des crochets qui soutiennent le quartier.

Un manchon en U solidaire de l'extrémité de la tige vient de préférence enserrer avec jeu l'une des extrémités latérales de la tête de centrage de façon que le mouvement vertical vers le haut de ladite tête entraîne également vers le haut les côtés tige des deux vérins d'extension et les deux pièces d'appui, dégageant ainsi le rail. De cette manière, lorsque la tête de centrage est en position haute, le rail aérien se trouve complètement dégagé et il est possible de faire déplacer le quartier suspendu par les crochets avant et arrière jusqu'à placer ceux-ci de part et d'autre de la tête de centrage. On descend ensuite la tête de centrage, puis l'on agit sur les deux vérins d'extension dont les deux pièces d'appui viennent exercer leur poussée sur les deux crochets du quartier, provoquant ainsi la mise en extension de celui-ci sans toucher à la viande.

L'invention sera mieux comprise à l'étude de la description détaillée d'un mode de réalisation pris à titre d'exemple nullement limitatif, et illustré par les dessins annexés, sur lequels :

la figure 1 est une vue schématique en plan d'une installation conforme à l'invention, montrant le trajet des rails aériens et, de manière - schématique, la position des différents vérins et capteurs qui permettent le fonctionnement automatique de l'installation;

la figure 2 est une vue schématique en élévation de l'installation de la figure 1;

la figure 3 illustre schématiquement le mode de travail des opérateurs pour un quartier avant de bovin;

la figure 4 est une vue analogue à la figure 3 dans le cas du traitement d'un quartier arrière de bovin;

la figure 5 est une vue partielle de l'installation montrant le premier poste au moment où le crochet avant vient d'être fixé sur l'extrémité de la crosse avant d'un quartier avant de bovin suspendu verticalement par un crochet arrière;

la figure 6 est une vue analogue à la figure 5, montrant la position du quartier incliné par rapport à l'horizontale et maintenu en vue d'un premier traitement;

la figure 7 est une vue agrandie de côté du mécanisme permettant le mouvement du rail pivotant visible sur les figures 5 et 6;

la figure 8 est une vue partielle de l'installation, montrant le deuxième poste comportant des moyens d'extension, l'ensemble étant représenté dans la position d'attente avant extension;

la figure 9 est une vue analogue à la figure 8, montrant la position d'extension prête pour le deuxième traitement;

la figure 10 est une vue en coupe agrandie de la tête de centrage des moyens d'extension en position haute;

la figure 11 est une vue en coupe agrandie de la tête de centrage des moyens d'extension en position basse avant extension;

la figure 12 est une vue de dessus agrandie des moyens d'extension avant extension;

la figure 13 est une vue en coupe selon XIII-XIII des figures 11 et 12;

la figure 14 est une vue partielle de l'installation, montrant schématiquement le troisième poste dans la position d'extension permettant le traitement final;

la figure 15 est une vue analogue à la figure 14 en fin de traitement, montrant les deux portions découpées du quartier; et

la figure 16 est une vue analogue à la figure 15 montrant l'évacuation des portions du quartier sous l'action de la gravité.

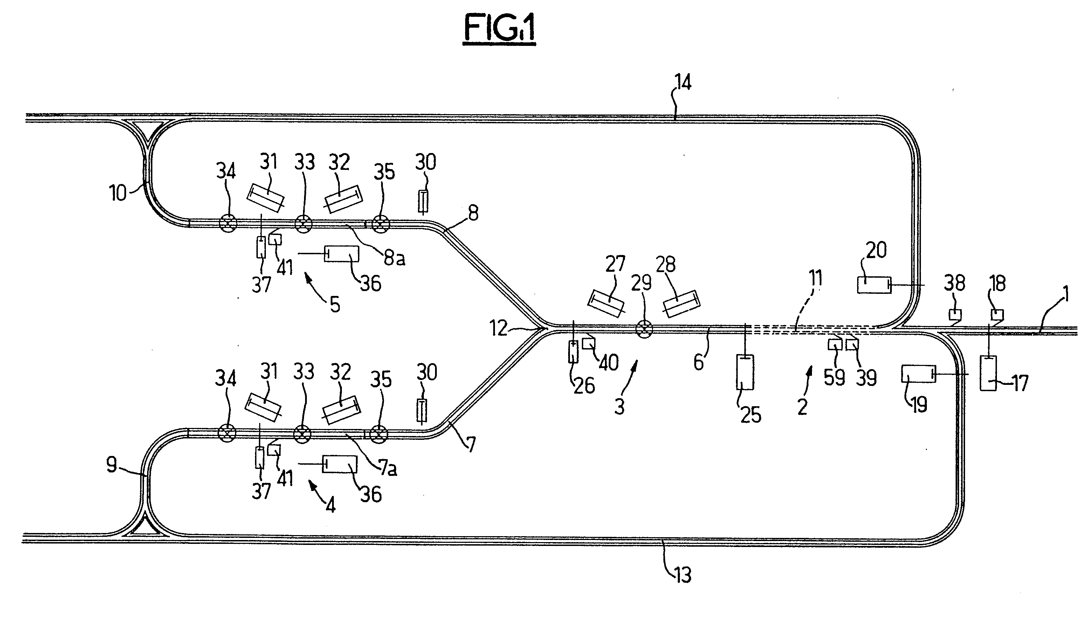

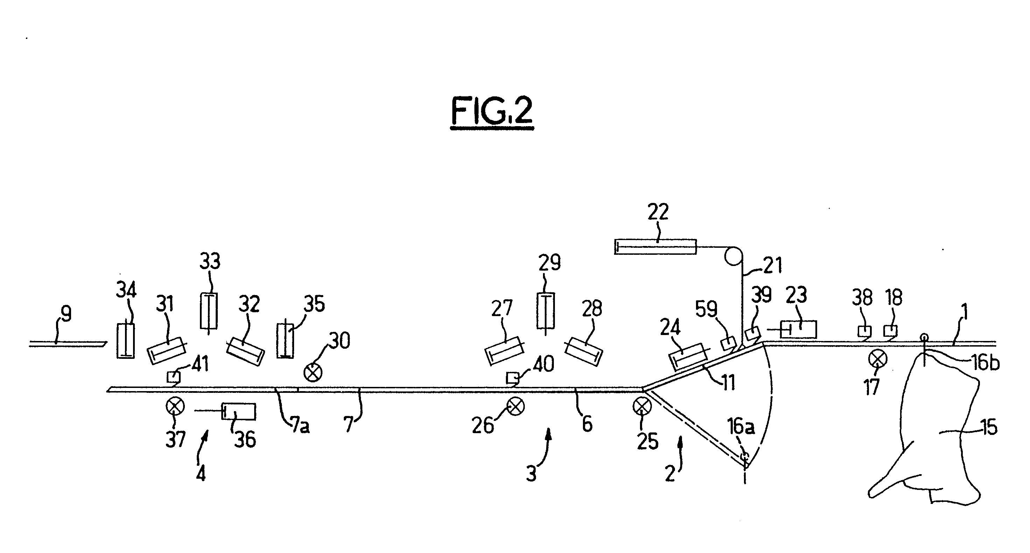

Telle qu'elle est représentée schématiquement sur les figures 1 et 2, l'installation selon l'invention comporte un assemblage de rails aériens sur lesquels peuvent se déplacer des quartiers de viande, par exemple des quartiers avant de bovins. Ces rails comportent deux chemins de roulement sur lesquels se déplacent des roulettes, le crochet passant entre les deux chemins de roulement. Un premier rail 1 situé à un niveau haut comme on peut le voir sur la figure 2, permet l'alimentation de l'installation en quartiers de viande. L'installation proprement dite comprend un premier poste 2, un deuxième poste 3 et deux postes terminaux 4 et 5 placés en parallèle. Le rail 6 du poste 2 ainsi que les rails 7 et 8 des postes 4 et 5 sont situés à un niveau inférieur à celui du rail 1. Les rails d'évacuation 9 et 10 se trouvent également au niveau supérieur comme le rail d'alimentation 1. Le passage d'un niveau à l'autre se fait au premier poste 2 au moyen d'un rail pivotant 11 et pour les postes terminaux 4 et 5, par des moyens de soulèvement d'une portion de rail 7a,8a.

Comme on peut le voir sur la figure 1, la sortie du deuxième poste 3 présente un embranchement 12 qui permet de faire passer le quartier vers l'un ou l'autre des postes terminaux 4 ou 5. Comme on peut le voir toujours sur la figure 1, l'installation comporte en outre des rails supplémentaires 13 et 14 permettant le retour d'un crochet vide et revenant sur le rail 1 en amont du premier poste 2.

Le quartier bovin, par exemple un quartier avant 15 (figure 2), arrive donc dans l'installation par le rail 1 en étant suspendu verticalement. Le crochet 16b se trouve bloqué dans une position déterminée sur le rail 1 par un doigt de blocage actionné par un vérin pneumatique 17. Dans cette position, il est possible de pratiquer sur le quartier ainsi suspendu verticalement, un traitement préalable comme on le verra plus loin. Un capteur 18 détecte la présence du crochet 16 sur le rail 1. Ce capteur peut commander deux vérins pneumatiques 19 et 20 (figure 1) qui agissent sur des doigts de blocage disposés sur l'arrivée des rails de retour de crochets vides 13 et 14, permettant ainsi de libérer l'un de ces crochets vides qui deviendra par la suite le crochet avant 16a maintenant le quartier 15.

Le pivotement du rail 11 est par un câble 21 dont l'une des extrémités est reliée à l'extrémité libre du rail 11 et l'autre extrémité à la tige d'un vérin pneumatique de levage 22. Un vérin pneumatique 23 permet, lorsqu'il est actionné, de bloquer le rail 11 dans sa position haute illustrée en trait plein sur la figure 2. Un vérin pneumatique 24 est en outre monté sur le rail pivotant 11 afin d'actionner un levier de blocage d'un crochet vide comme on le verra par la suite. Un vérin pneumatique 25 placé immédiatement en aval du rail pivotant 11 permet de bloquer un quartier avant son passage au deuxième poste 3. De la même manière, le vérin 26 permet le blocage du quartier au deuxième poste 3. Le poste 3 comporte des moyens d'extension munis de deux vérins d'extension 27,28 et d'un vérin de levage 29, dont la disposition et la structure seront précisées par la suite.

Les deux postes terminaux 4 et 5 étant identiques, comportent exactement les mêmes éléments. On se contentera donc d'expliciter uniquement l'un de ces postes. Le vérin 30 permet le blocage du quartier avant le troisième poste 4 ou 5, les portions de rail 7 et 8 en aval de l'embranchement 12 peuvent donc servir de zone tampon pour les quartiers provenant du deuxième poste 3. Chaque poste 4,5 comporte les mêmes moyens d'extension que le deuxième poste 3, à svoir deux vérins d'extension 31,32 et un vérin de levage 33. Une portion de rail 7a,8a peut être soulevée par l'action simultanée de deux vérins 34 et 35 dont la course est différente de façon que la position finale soit inclinée, permettant ainsi l'évacuation du quartier par gravité sur le rail d'évacuation 9,10. Le vérin 36 permet le blocage du rail 7a,8a en position basse pendant le traitement du quartier. Le vérin 37 bloque le crochet avant du quartier dans sa position au dernier poste 4 ou 5.

Un certain nombre de contacts sont également disposés le long des rails aériens de façon à commander l'installation automatiquement.

Le contact 18 sur le rail d'alimentation 1 détecte la présente du crochet 16 et permet comme on l'a vu, par action sur les vérins 19 et 20, l'alimentation d'un crochet vide. Le contact 38 sur le rail 1 en aval du vérin de blocage 17 détecte le passage du quartier 15 toujours suspendu verticalement par le crochet arrière 16. Ce contact commande le vérin 17 qui bloque à nouveau le passage et le vérin 25 afin de bloquer le passage du premier poste 2 au deuxième poste 3. Le crochet vide peut alors être amené à la main ou tomber automatiquement par gravité sur le rail pivotant 11 en position haute comme illustré en trait plein sur la figure 2, jusqu'à venir buter sur le doigt de blocage commandé par le vérin 24. Lors de son passage, ce crochet vide est détecté par le capteur 39. Le vérin 23 est alors actionné de façon à libérer le rail pivotant 11. Le vérin 22 est actionné de façon à faire passer le rail pivotant 11 de sa position haute à sa position basse. Dans cette position, le crochet 16a maintenu à l'extrémité du rail 11 peut aisément être accroché à la crosse avant du quartier 15 puisqu'il se trouve sensiblement à la hauteur de cette dernière.

Le vérin 24 est actionné de façon à libérer le passage sur le rail pivotant 11 pour le crochet avant 16a. Le vérin 22 est actionné dans l'autre sens de façon à remonter le rail pivotant 11. Dans ce mouvement, le quartier 15 qui reste accroché par le crochet arrière 16b maintenu sur le rail 1 de niveau haut et par le crochet avant 16a qui peut se déplacer sur le rail incliné 11, prend une position inclinée par rapport à l'horizontale, légèrement en extension. Après verrouillage du rail 11 dans sa position haute par le vérin 23, le traitement qui doit être effectué sur le quartier au premier poste 2 peut commencer.

Une fois que ce traitement est terminé, le vérin 17 est à nouveau actionné de façon à libérer le crochet arrière 16b. Le quartier se déplace alors aisément par gravité sur le rail incliné 11 grâce aux roulettes des deux crochets de suspension 16a et 16b jusqu'à la position où le crochet avant 16a vient buter sur le doigt de verrouillage du vérin 26. Le capteur 40 détecte la présence de cette position et provoque la mise en oeuvre des moyens d'extension par action préalable sur le vérin 29 qui entraîne la descente des différents moyens d'extension, puis lorsque ceux-ci se trouvent au niveau du rail 6, l'actionnement des vérins 27 et 28 provoquant l'extension du quartier par action sur les crochets 16a et 16b. Le quartier se trouve alors en position horizontale soumis à une extension. Une autre série d'opérations peut alors être effectuée sur le quartier. Lorsque ce traitement est terminé, les moyens d'extension sont remontés après que les vérins 27 et 28 aient été rentrés. Le quartier 15 peut être déplacé jusque sur les portions de rail 7a ou 8a des postes finaux 4 ou 5 en empruntant l'une ou l'autre des branches des rails 7 et 8.

Le crochet avant 16a vient à nouveau en contact avec un doigt de blocage actionné par un vérin de blockage 37 et un capteur 41 provoque la mise en oeuvre des moyens d'extension constitués par les vérins 33 d'une part et 31 et 32 d'autre part. Dans cette position, le vérin 36 bloque le rail 7a,8a en position basse. Un certain nombre d'opérations complémentaires peuvent encore être effectuées à ce poste final 4,5. On peut envisager en particulier de séparer complètement le caparaçon de l'ensemble collier-basses-côtes comportant l'épaule, le quartier se trouvant donc séparé en deux portions distinctes. Avant que la découpe ne soit complète, l'opérateur accroche avantageusement un crochet supplémentaire à la partie avant du caparaçon et fixe ce crochet supplémentaires sur le crochet avant 16a. Après séparation complète, il ne reste plus alors qu'à décrocher le crochet arrière 16b qui se trouve libre, les deux parties du quartier ainsi séparé se trouvant maintenues par le crochet avant 16a.

L'évacuation de cet ensemble se fait en agissant sur les deux vérins de soulèvement 34 et 35 de course différente, ce qui place la portion de rail 7a,8a dans une position haute inclinée par rapport à l'horizontale, permettant ainsi l'évacuation par simple gravité des deux portions de quartier après traitement dans l'installation de l'invention par le rail d'évacuation 9,10 qui se trouve au niveau haut. Le crochet vide 16b peut ensuite revenir par l'un des rails de retour 13 ou 14. Dans une autre variante, chacune des portions du quartier reste suspendue à l'un des crochets 16a ou 16b pour l'évacuation.

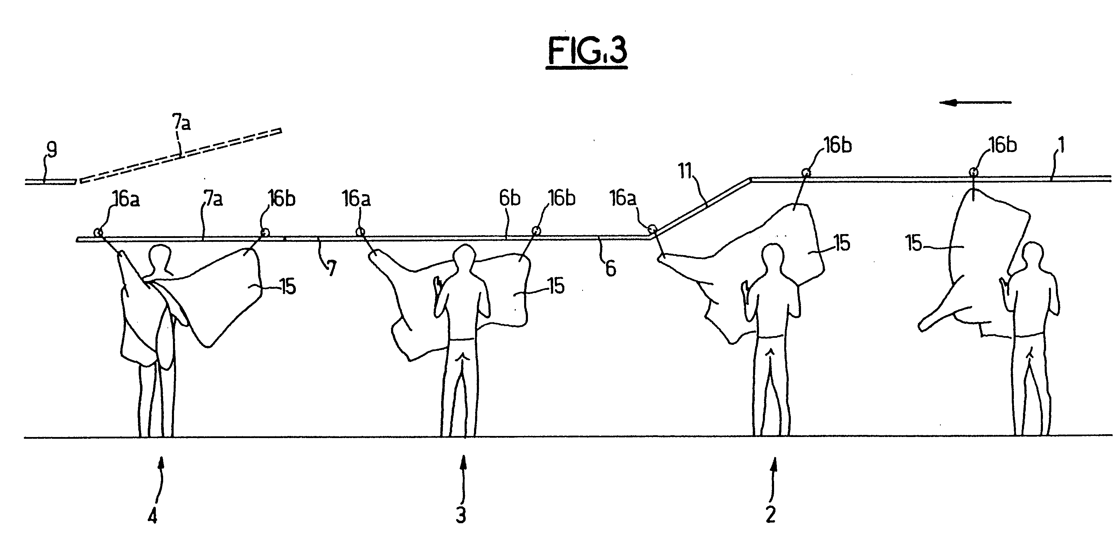

Si l'on se réfère maintenant à la figure 3, on peut, à titre d'exemple, illustrer différentes opérations de traitement qu'il est possible d'effectuer sur un quartier avant de bovin.

Lorsque le quartier 15 est encore suspendu au rail 1 dans la position illustrée à l'extrême droite de la figure 3, un opérateur pratique un traitement préalable consistant à retirer manuellement au couteau les aponévroses internes, une partie de la peau extérieure du caparaçon et du sternum. Au premier poste 2, un autre opérateur effectue sur le quartier 15 maintenu en position légèrement inclinée par rapport à l'horizontale un premier traitement consistant par exemple à retirer manuellement au couteau la peau rouge sur les plats et le nerf cervical.

Au deuxième poste 3, un autre opérateur pratique un deuxième traitement qui se fait de préférence manuellement en utilisant un couteau mécanique à lame circulaire et consiste en un apprêtage permettant la suppression des tampons de graisse et des souillures diverses réalisant ainsi un parage préalable des muscles. L'opérateur enlève également la noix de graisse du collier. Il effectue un parage au couteau mécanique à lame circulaire de la totalité des faces interne et externe du quartier.

Au troisième poste 4 de la figure 3, le traitement principal est effectué manuellement au couteau. Un certain nombre de muscles sont prélevés. Le collier est séparé, la noix de graisse du collier est retirée ainsi que la noix de graisse de l'épaule après éventuellement sciage convenable. Le caparaçon est séparé du reste du quartier comportant l'épaule décollée du collier basses-côtes.

Les différents traitements peuvent avantageusement être effectués par deux opérateurs, le premier assurant le traitement préalable ainsi que les traitements relativement simples effectués au premier poste 2 et au deuxième poste 3, tandis que le deuxième opérateur plus spécialisé se charge des opérations du troisième poste 4. La durée plus importante de ces dernières opérations justifie l'existence de deux postes 4 et 5 en parallèle à l'issue du deuxième poste 3.

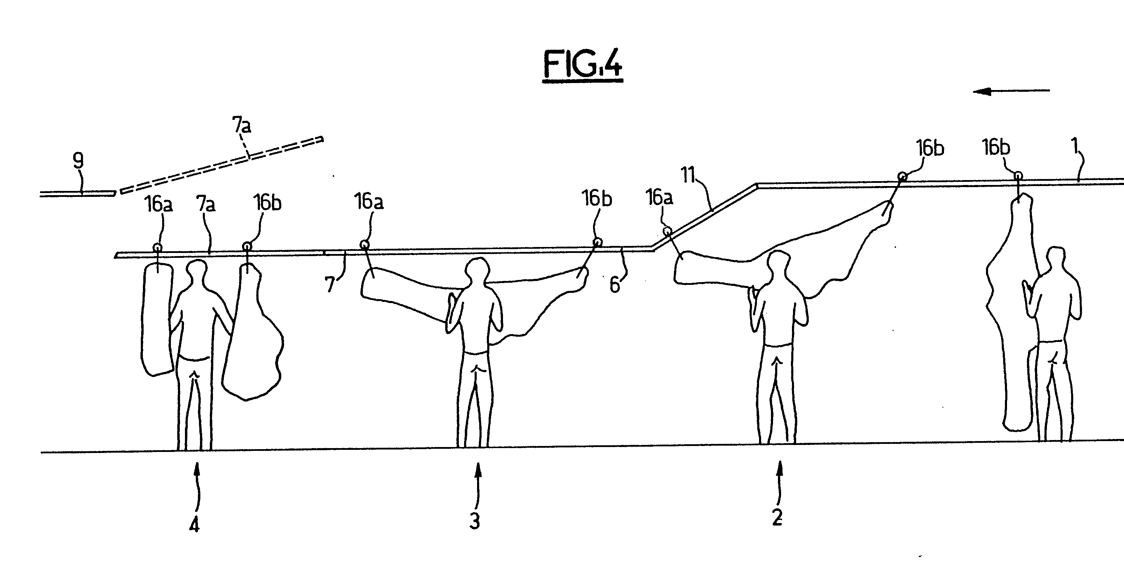

Comme illustré sur la figure 4, l'installation de l'invention peut également être utilisée pour le traitement de quartiers arrières de bovins. Dans ce cas, le traitement préliminaire consiste à retirer les bavettes et à préparer le déhanchage. Au premier poste 2, lorsque le quartier arrière est en position légèrement inclinée par rapport à l'horizontale, on procède à un dégraissage des deux faces du quartier, de préférence au couteau mécanique à lame circulaire.

Au deuxième poste 3, d'autres traitements sont pratiqués, en particulier le retrait des noix de graisse. Enfin, les postes terminaux 4,5 permettent d'effectuer le déhanchage et le sciage de façon à obtenir deux portions de quartier.

Dans tous les cas, les portions de quartier sont ensuites déplacées sur les rails d'évacuation 9 et 10 jusqu'à d'autres postes qui assurent le désossage et le prélèvement des muscles. Ces opérations ultérieures non décrites sont grandement facilitées par les traitements préliminaires de dégraissage effectués dans l'installation de l'invention. Grâce à ces traitements préliminaires en effet, il est possible dans certains cas d'éviter toute reprise des muscles après désossage. De plus, il est clair que le dégraissage et le parage effectués de manière semi automatisée grâce à l'installation de l'invention, sur de grandes surfaces, sont beaucoup plus rapides que les dégraissages habituels effectués sur chaque muscle individuel après désossage. On évite également les efforts habituellement nécessaires au retournement des morceaux sur les tables de désossage.

Enfin, la mise en extension du quartier et son blocage en position entraînent une grande stabilité et une facilité de travail sans intervention manuelle et sans contact avec la viande. L'effort d'extension exercé sur le quartier en particulier aux postes 3, 4 et 5, favorise la stabilité pendant le travail ainsi que la séparation des muscles et des portions de quartier.

Le parage, le dégraissage ainsi que le prélèvement se font chaque fois dans la position optimale, que le quartier soit en position suspendue verticalement ou horizontalement à la hauteur adéquate compte tenu de la différence de niveau entre les rails respectifs d'alimentation et d'évacuation 1 et 9 et les rails de travail 6,7 et 8.

L'effort physique est en outre grandement diminué par le déplacement aisé des quartiers par gravité d'un bout à l'autre de l'installation.

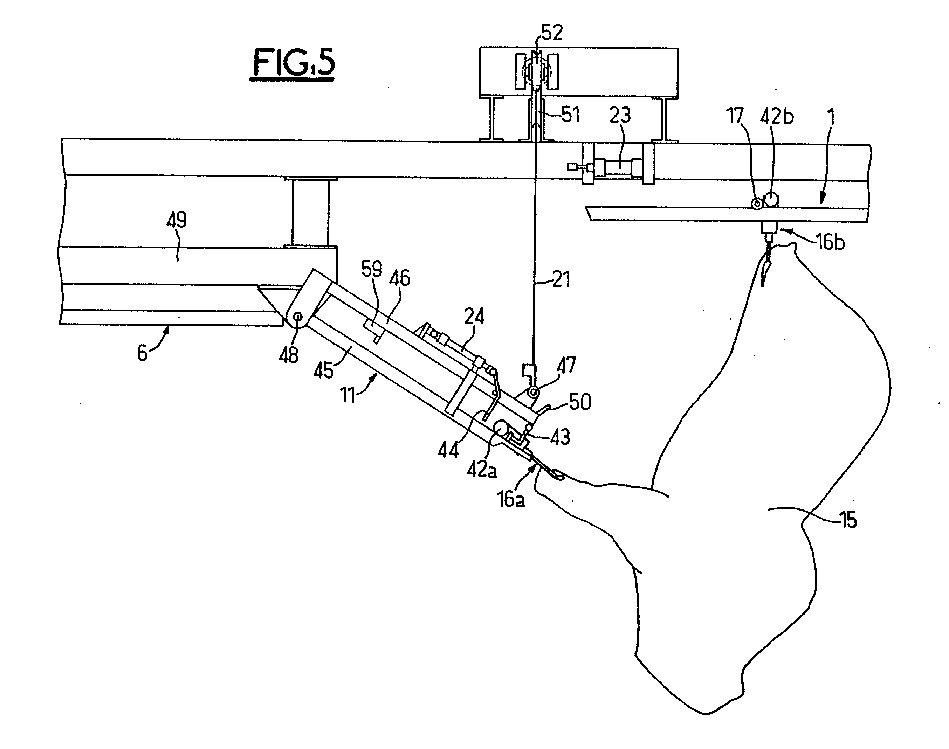

On va maintenant décrire de manière plus détaillée, un mode de réalisation pratique d'une installation de l'invention en se référant aux figures 5 et suivantes.

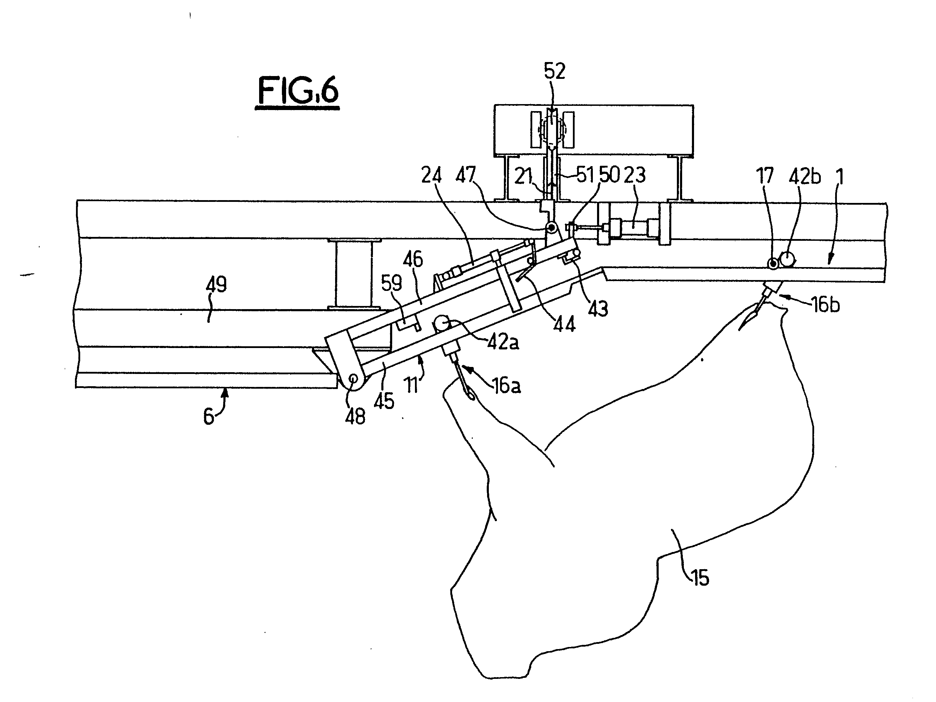

Les figures 5 à 7 illustrent plus particulièrement le premier poste référencé 2 sur les figures précédentes. Les pièces identiques portent les mêmes références. On retrouve sur les figures 5 et 6 les crochets 16b et 16a qui maintiennent le quartier 15. Ces crochets peuvent se déplacer par leurs roulettes 42a et 42b sur les chemins de roulement des rails de l'installation. Comme illustré sur les figures 5 et 6, la roulette 42b du crochet arrière 16b est bloquée en position sur le rail 1 par la tige du vérin 17. Dans la position basse du rail pivotant 11, la roulette 42a du crochet avant 16a est maintenue sur le rail 11 par une butée mobile 43. De plus, un levier de blocage 44 est actionné par le vérin 24. Le rail 11 est constitué par deux chemins de roulement 45 sur laquelle est monté le vérin 24. La poutre 46 comprend également l'axe 47 sur lequel vient s'accrocher le câble 21. L'ensemble peut pivoter autour d'un axe fixe 48 solidaire d'une poutre 49 faisant partie du bâbit fixe de l'installation et sur laquelle est également fixé le rail 6. L'extrémité libre de la poutre 46 comporte un oeil de verrouillage 50 qui peut coopérer avec la tige du vérin 23 pour bloquer le rail 11 en position haute comme illustré sur la figure 6.

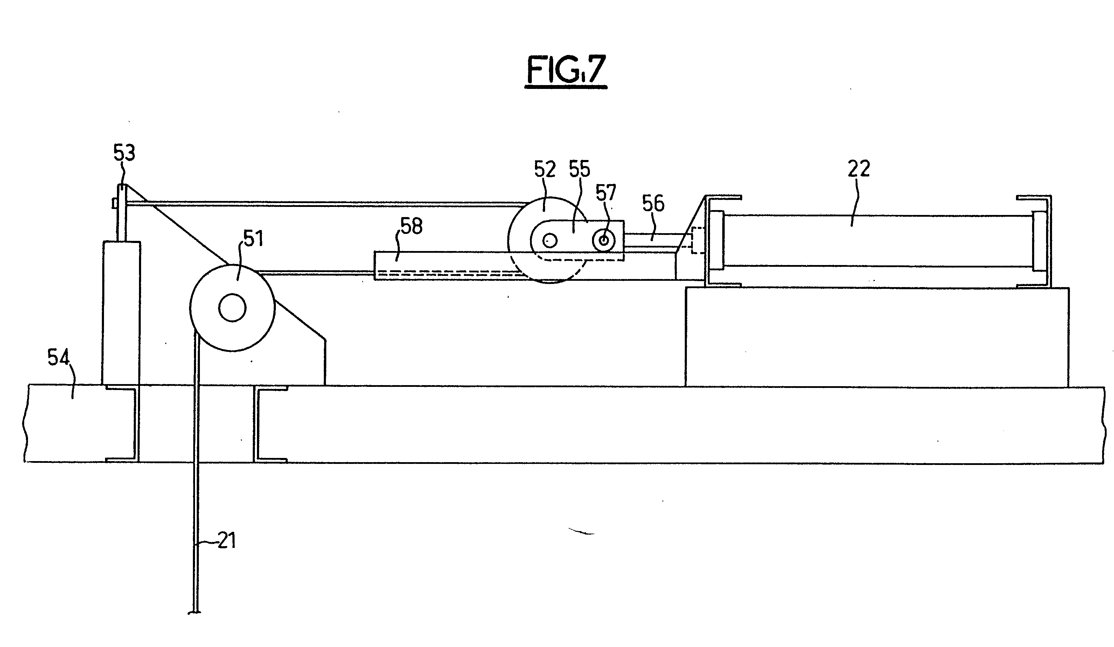

Le câble 21 passe sur une poulie fixe 51 - (figure 7) puis sur une poulie mobile 52 avant de revenir à son point d'accrochage fixe 53 solidaire du bâti 54 de l'installation. La poulie 52 est fixée à une chape 55 solidaire de l'extrémité de la tige 56 du vérin de levage 22 disposé horizontalement. Des roulettes 57 sont montées de part et d'autre de la chape 55 et roulent sur des glissières 58 lors du déplacement de la poulie 52.

Lorsque le quartier 15 suspendu uniquement par le crochet arrière 16b vient dans la position illustrée sur la figure 5, la roulette 42b étant bloquée par la tige du vérin 17, le rail pivotant 11 se trouve encore dans la position haute illustrée sur la figure 6. Le levier de blocage 44 est alors actionné par le vérin 24 dans la position de fermeture illustrée sur la figure 5. Un crochet vide 16a peut donc être introduit par un embranchement du rail 1 jusqu'à arriver en blocage sur le levier 44 en dépassant la butée mobile 43 qui est alors ouverte comme illustré sur la figure 6.

On abaisse ensuite le rail pivotant 11 jusqu'à la position illustrée sur la figure 5. La roulette 42a restant bloquée par la butée 43, le crochet 16a se trouve à proximité immédiate de la crosse avant du jarret du quartier 15, ce qui permet à l'opérateur d'accrocher facilelement le crochet 16a comme illustré sur la figure 5.

Une fois que cette opération est effectuée, le vérin 24 est actionné pour libérer le levier de blocage 44 qui se place dans la position ouverte illustée sur la figure 6. Le rail pivotant 11 est ensuite ramené progressivement à sa position haute en agissant sur le câble 21 par l'intermédiaire du vérin de levage 22. Pendant cette remontée du rail pivotant 11, la roulette 42a du crochet 16a peut librement se déplacer sur les chemins de roulement du rail 11. Dès que le rail 11 présente une certaine inclinaison par rapport à l'horizontale, la roulette 42a a tendance à descendre sur le rail 11, provoquant ainsi une action d'extension sur le quartier 15 dont l'autre crochet 16b est maintenu en position bloquée par sa roulette 42b et par la tige du vérin 17. Dans la position finale illustrée sur la figure 6, le quartier 15 se trouve donc en position légèrement inclinée par rapport à l'horinzontale et subissant une extension par le simple effet de la gravité, la roulette 42a se trouvant encore sur le rail pivotant 11. On choisit dans ce but la position convenable du vérin de blocage 17.

Dans le cas où l'accrochage du crochet 16a a été mal fait, il peut se faire que la remontée du rail 11 n'entraîne pas le quartier 15. Dans ce cas, le crochet 16a roule par sa roulette 42a jusqu'au rail 6 sous l'action de son propre poids. Le passage de ce crochet libre est détecté par le capteur 59 solidaire de la poutre 46. Un nouveau crochet libre peut alors être introduit et le rail 11 être à nouveau abaissé de façon à recommencer les opérations jusqu'à ce que le crochet 16a soit correctement accroché sur le quartier 15.

Dans la position illustrée sur la figure 6, le quartier 15 est en position pour les opérations de traitement prévues. Une temporisation est déclenchée par l'arrivée du rail 11 en position haute de façon à maintenir bloqué le crochet arrière 16b pendant toute la durée nécessaire à ces opérations.

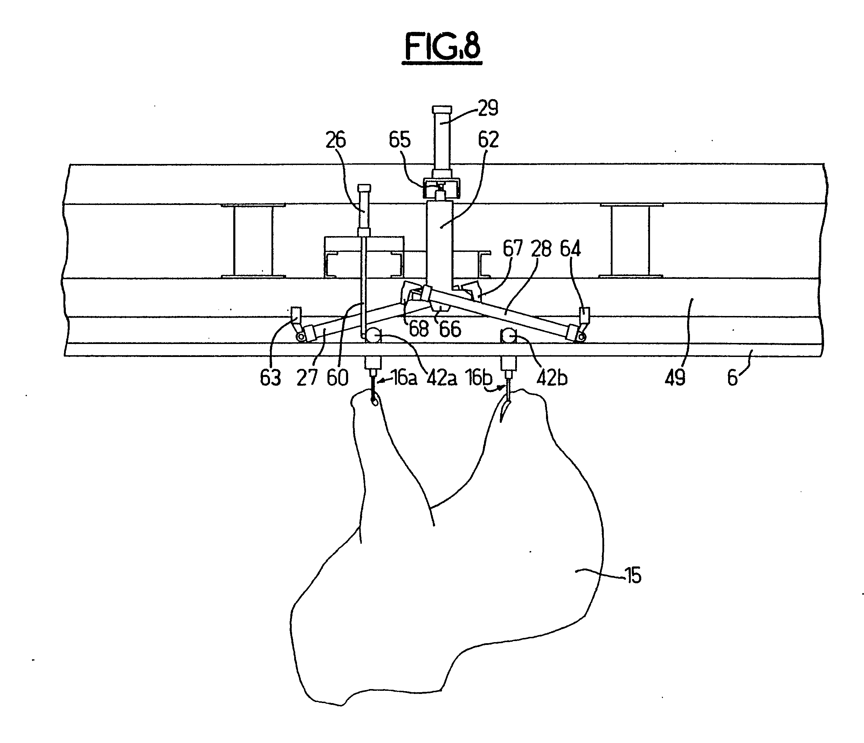

Les figures 8 à 13 illustent la structure des différents éléments de l'installation au deuxième poste référencé 3 sur les figures précédentes. Les pièces identiques portent les mêmes références.

Comme on peut le voir tout d'abord sur la figure 8, un quartier 15 a été déplacé sur le rail 6 après dégagement du vérin de blocage 25 (figures 1,2) de la position qu'il occupait préablablement au premier poste 2 lorsque les opérations de traitement ont été terminées. Le quartier 15 toujours supporté par le crochet avant 16a et le crochet arrière 16b est totalement détendu de sorte que les roulettes 42a et 42b se sont rapprochées l'une de l'autre (figure 8). Le quartier 15 peut être déplacé manuellement jusqu'à ce que la roulette avant 42a vienne en butée sur un organe de blocage 60 solidaire de la tige 61 du vérin de blocage 26. Dans cette position, les roulettes 42a, 42b se trouvent de part et d'autre d'une tête de centrage 62 représentée sur la figure 8 en position haute et sur laquelle sont articulés les côtés tige des deux vérins d'extension 27 et 28 dont les cylindres sont articulés quant à eux sur les points fixes 63 et 64 solidaires de la poutre 49 du bâti de l'installation.

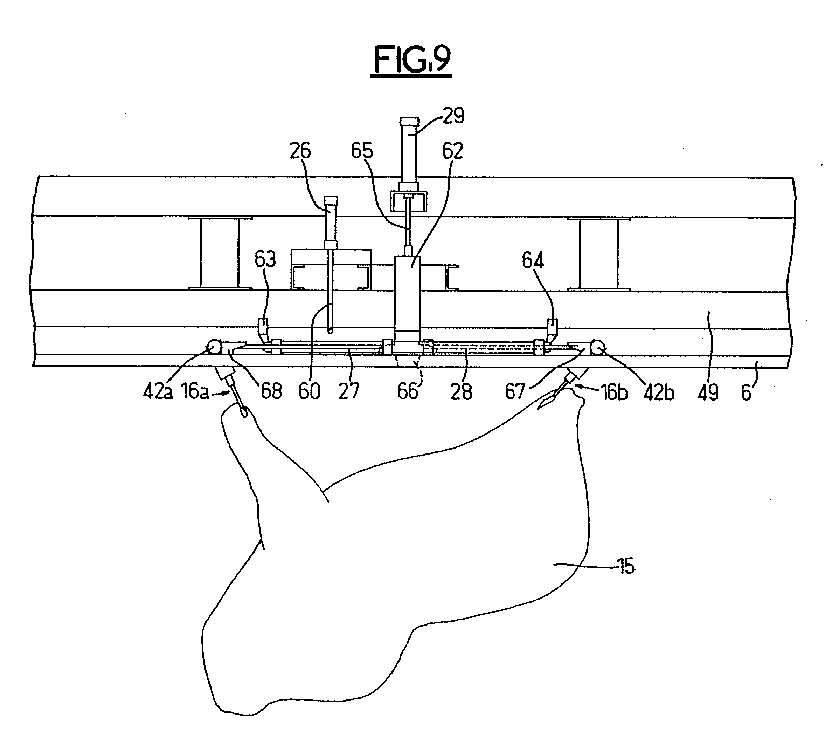

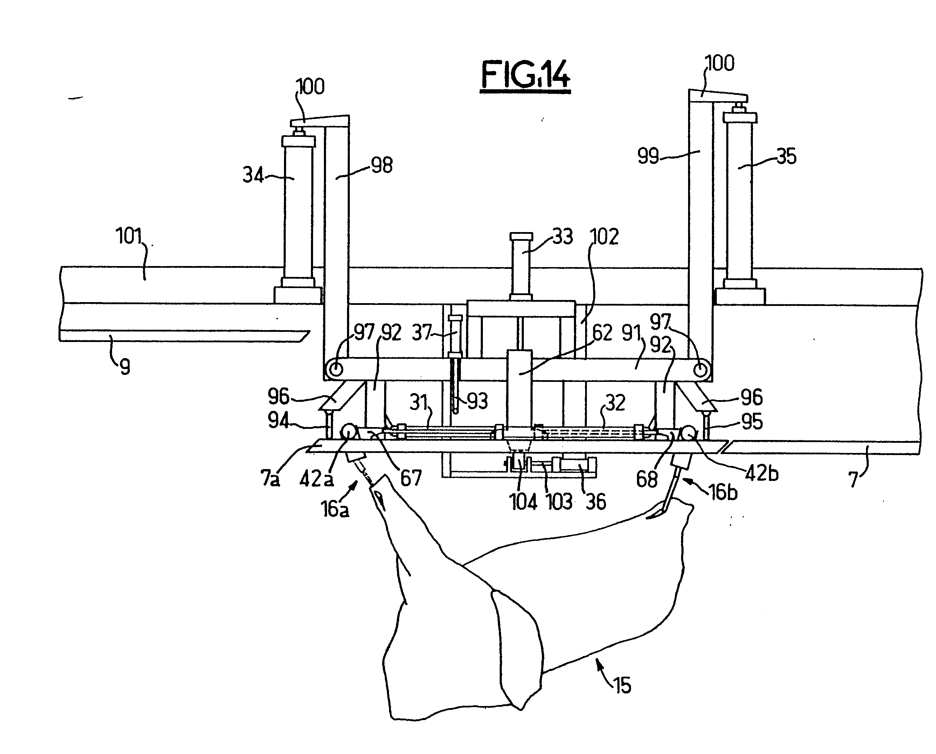

La tête de centrage 62 est solidaire de la tige 65 du vérin de levage 29 disposé verticalement. Lorsque le vérin 29 est actionné, il provoque donc un mouvement de translation verticale de haut en bas de la tête de centrage 62 jusqu'à ce que cette dernière atteigne la position illustrée sur la figure 9 où un ergot de centrage 66 est venu s'engager entre les deux chemins de roulement 6a et 6b du rail (figure 13). Alors seulement les deux vérins d'extension 27 et 28 sont actionnés de façon que les pièces d'appui 67 et 68 qui sont solidaires des extrémités des tiges respectives des vérins d'extension 27 et 28 viennent agir sur les roulettes 42a et 42b en écartant celles-ci qui peuvent rouler sur le rail 6 comme illustré sur la figure 9. On notera bien entendu qu'avant cette opération, le vérin 26 a été actionné de façon à dégager l'organe de blocage 60, permettant ainsi le passage libre de la roulette avant 42a sur le rail 6.

Lorsque la position d'extension maximale du quartier 15 illustrée sur la figure 9 a été atteinte, une temporisation est déclenchée de façon à maintenir le quartier dans cette position pendant la durée nécessaire au traitement désiré à ce poste sur le quartier. On notera que le quartier est maintenu en position étendue horizontale à un niveau relativement bas dans une position qui est donc la plus favorable pour les opérations de parage et d'apprêtage, de préférence effectuées à l'aide d'un couteau circulaire électrique comme indiqué précédemment.

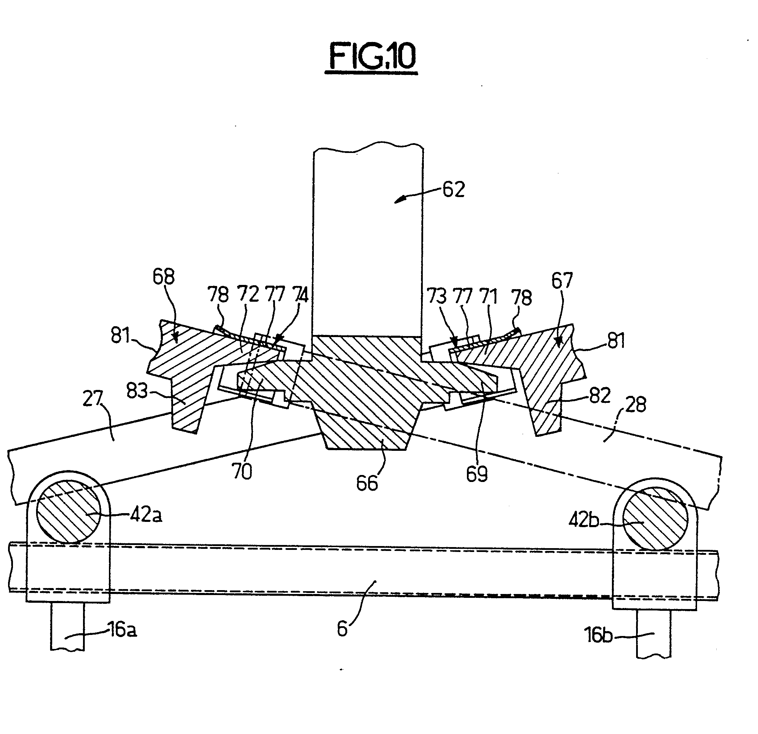

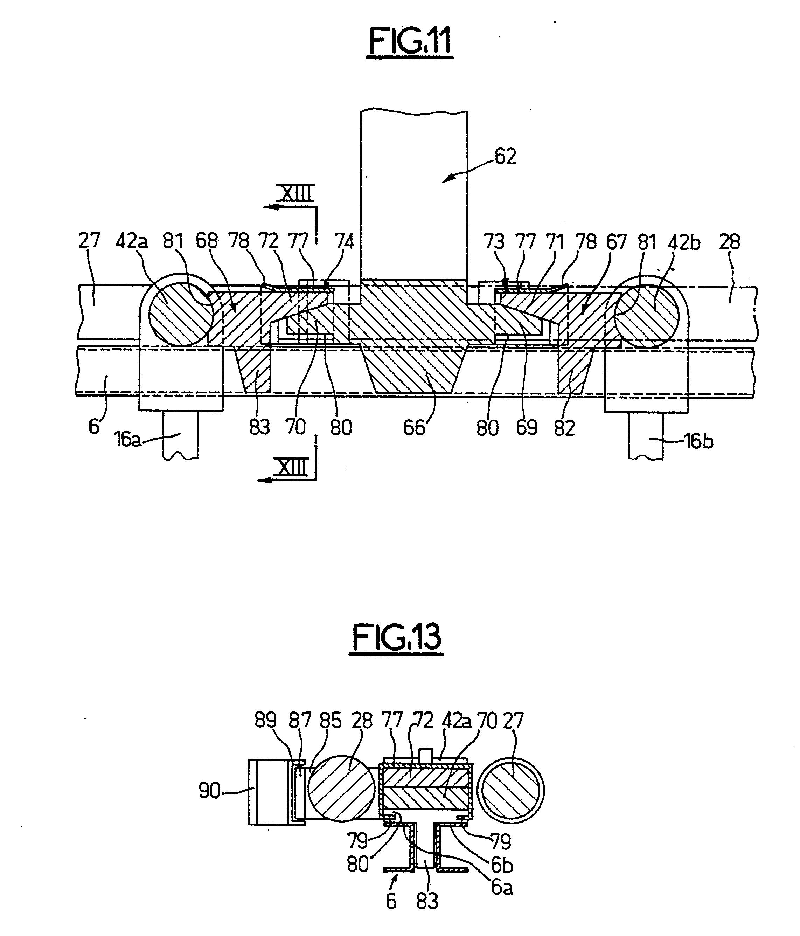

On se référera maintenant aux figures plus détaillées 10 à 12 pour mieux comprendre la structure particulière des moyens d'extension qui comprennent la tête de centrage 62 et les deux vérins d'extension 27 et 28. La figure 10 illustre de manière agrandie les principaux éléments des moyens d'extension dans la position haute de la figure 8, tandis que la figure 11 les représente dans la position basse de la figure 9, mais avant extension. La figure 13 représente une coupe dans la position basse correspondant à la figure 11 des moyens d'extension.

L'extrémité inférieure de la tête de centrage 62 comporte dans sa partie centrale l'ergot de centrage 66 et deux portées latérales 69 et 70 légèrement inclinées par rapport à l'horizontale. Ces portées latérales 69,70 viennent en contact par leur surface inclinée avec des excroissances en forme de coin 71 et 72 faisant partie des pièces d'appui respectives 67 et 68. Ce contact se fait par la totalité des surfaces dans la position basse de la figure 11 et par une seule ligne dans la position haute de la figure 10.

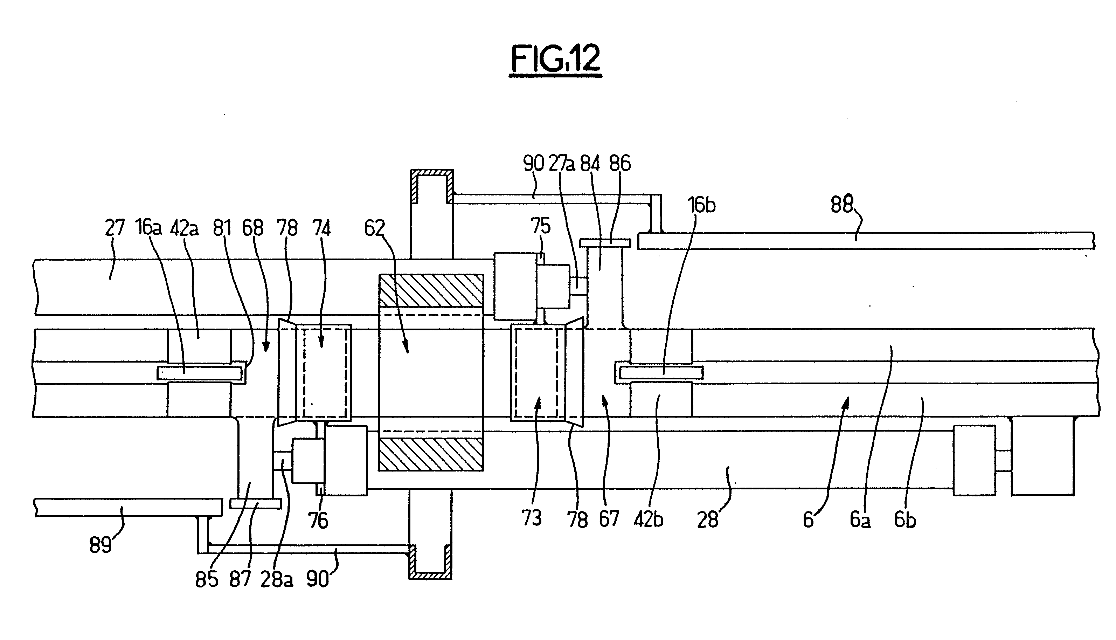

Un manchon en U 73,74 (figure 12) est solidaire par soudure d'une plaque 75,76 elle-même vissée à l'extrémité du cylindre de chacun des vérins d'extension 27,28. Chaque manchon en U 73,74 présente une paroi supérieure 77 qui s'évase en entonnoir vers l'extérieur en 78 (figures 10,11), ainsi que des rebords inférieurs 79 visibles plus particulièrement sur la figure 13. Les deux manchons 73,74 peuvent ainsi enserrer à la fois les extrémités latérales 69,70 de la tête de centrage 62 et les excroissances en forme de coin 71,72 des deux pièces d'appui 67,68. Un jeu 80 (figures 11,13) subsiste dans la position basse de la tête de centrage 62 entre la face inférieure des extrémités latérales 69,70 et les rebords inférieurs 79 des manchons 73,74. La face supérieure 77 des manchons 73,74 est au contraire en contact avec la face supérieure des excroissances 71,72. De cette manière, il est possible à la tête de centrage 62 d'entraîner vers le haut dans son mouvement de retrait illustré sur la figure 10 les deux manchons 73,74 ainsi que les pièces d'auppi 67,68, les manchons 73,74 solidaires des extrémités côté tige des vérins 27 et 28, étant entraînés vers le haut par les extrémités latérales 69,70 de la tête de centrage 62. Le pivotement des vérins 27,28 accompagnés de leurs manchons 73,74 et des pièces d'appui 67,68, est rendu possible par le jeu précité 80 qui disparaît dans la position haute (figure 10).

Les pièces d'appui 67,68 comportent en outre une gorge incurvée 81 (figure 12) qui peut venir prendre appui sur les roulettes respectives 42a,42b ainsi qu'un ergot de centrage 82,83 qui peut, dans la position basse de la tête de centrage 62 illustrée sur la figure 11, venir s'insérer comme l'ergot de centrage 66 entre les deux chemins de roulement 6a,6b du rail 6.

En se reportant à la figure 12, on voit que chacune des pièces de centrage 67,68 est fixée à l'extrémité de la tige 27a,28a des vérins d'extension 27,28 par une branche latérale 84,85. La fixation des tiges 27a,28a se fait donc sensiblement au centre de la pièce d'appui 67,68. Les extrémités 86,87 des branches 84,85 sont adaptées pour coopérer avec une glissière latérale 88,89 solidaire du bâti de l'installation par des poutres 90. Les entrées des glissières 88,89 sont disposées de façon que dans la position basse avant extension illustrée sur les figures 11 et 12, les extémités 86,87 ne soient pas encore en prise avec lesdites glissières, ce qui permet donc la descente libre des pièces d'appui 67,68 jusque dans cette position basse. Au contraire, lors du mouvement d'extension résultant de l'actionnement des vérins 27 et 28, les pièces d'appui 67,68 sont guidées dans leur mouvement par les glissières 88,89.

Lorsque les opérations de traitement au deuxième poste 3 sont terminées, les deux vérins d'extension 27 et 28 sont relachés, ce qui supprime toute tension sur le quartier 15. Puis la tête de centrage 62 est remontée par le vérin de levage 29 jusqu'à la position illustrée sur la figure 8. Le vérin 26 reste dans la position de retrait où le levier de blocage 60 est en position haute. Il est donc aisé de déplacer le quartier 15 manuellement en faisant rouler les roulettes 42a et 42b sur le rail 6. Lorsque le vérin de blocage 30 (figures 1 et 2) a été actionné de façon à libérer le passage, le quartier 15 peut être ensuite déplacé jusqu'à l'un des troisième postes 4 ou 5.

Les figures 14 à 16 illustrent différences positions des organes de l'installation au troisième poste 4 étant entendu que le poste 5 est identique.

Sur ces figures, les pièces identiques portent les mêmes références que sur les figures précédentes.

La portion de rail 7a est solidaire d'une poutre mobile 91 par l'intermédiaire des montants 92. La poutre 91 sert de support au vérin de levage 33 qui permet le mouvement de translation de la tête de centrage 62 qui a la même structure que celle illustrée sur les figures 8 à 13. Les vérins d'extension 31 et 32 sont identiques aux vérins d'extension 27 et 28 précédemment décrits et sont en particulier articulés sur la tête de centrage 62 de la manière illustrée sur les figures précédentes, et en des points fixes solidaires des montants 92.

La poutre mobile 91 ser également de support au vérin de blocage 37 disposé verticalement et dont la tige est solidaire d'un organe de blocage 93 qui est capable d'empêcher le mouvement d'une roulette 42a,42b sur la portion de rail 7a.

Une butée de sécurité avant 94 et unebutée de sécurité arrière 95 sont également prévues de manière articulée sur des montants 96 solidaires de la poutre 91 afin d'empêcher, lorsque cela est nécessaire, la chute des roulettes 42a,42b à l'extérieur de la portion de rail 7a.

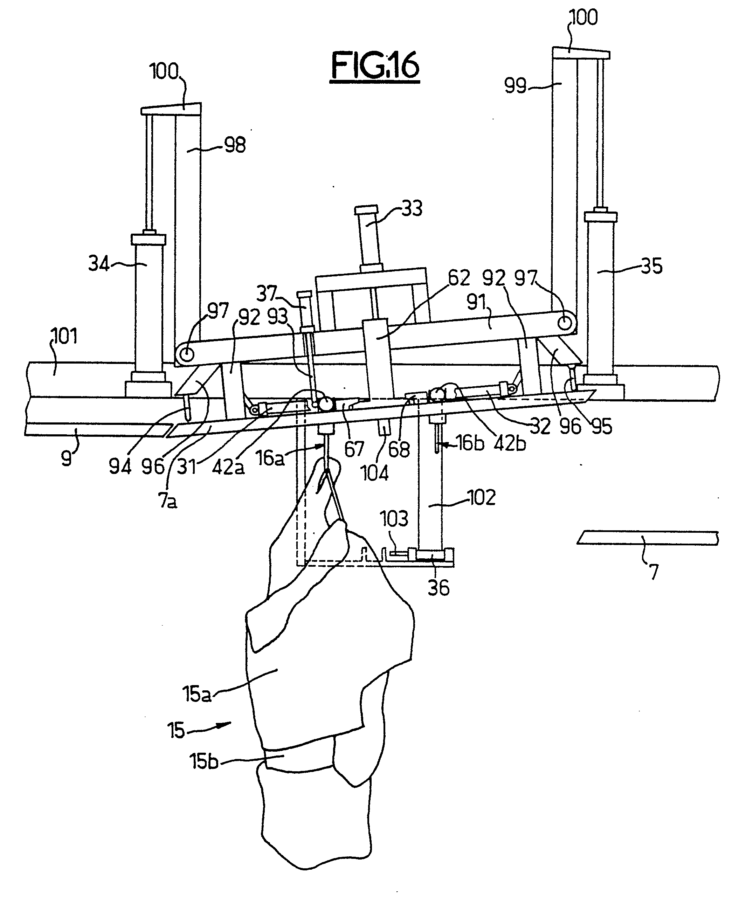

A ses deux extrémités, la poutre mobile 91 comporte une articulation 97 avec deux montants latéraux 98 et 99 qui présentent à leur partie supérieure un rebord 100 sous lequel vient prendre appui la tige respective des deux vérins de soulèvement 34,35 disposés verticalement et montés sur la poutre 101 du bâti de l'installation. La course du vérin de soulèvement 35 est supérieure à celle du vérin de soulèvement 34. De la même manière, la longueur du montant 99 est supérieure à celle du montant 98. Lorsque les vérins de soulèvement 34 et 35 sont actionnés, il en résulte donc, comme on peut le voir sur la figure 16, une position finale inclinée de la poutre mobile 91 grâce aux articulations 97. La portion de rail 7a se trouve donc également inclinée en direction du rail d'évacuation 9.

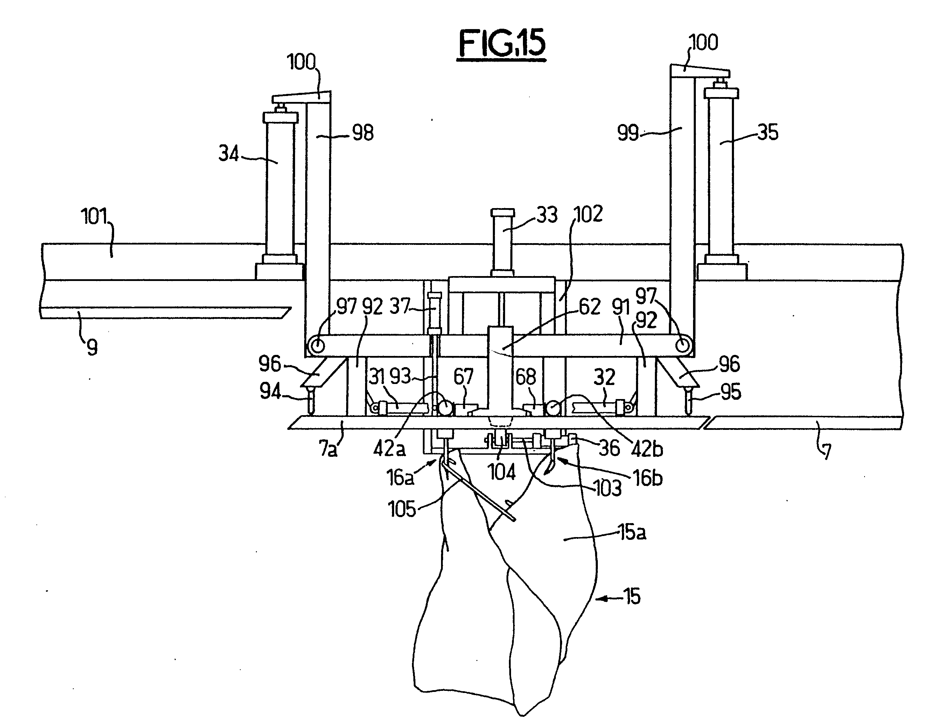

Le vérin de blocage 36 est monté sur une poutre 102 solidaire du bâti de l'installation. Sa tige 103 peut venir coopérer avec un oeilleton 104 solidaire de la portion de rail 7a de façon à bloquer cette dernière dans la position basse illustrée sur les figures 14 et 15.

Lorsque le quartier 15 est avancé jusqu'au troisième poste 4, la tête de levage 62 se trouve en position haute non illustrée sur les figures 14 à 16. Pour comprendre cette position, on pourra se reporter à la figure 8, les moyens d'extension du deuxième poste 3 étant identiques aux moyens d'extension du troisième poste 4. Les vérins d'extension 31 et 32 se trouvent donc inclinés comme illustré sur la figure 8 pour les vérins 27,28. La butée de sécurité arrière 95 est relevée tandis que le vérin 37 a été actionné de façon à placer l'organe de blocage 93 dans la position basse. La roulette avant 42a vient donc en butée sur l'organe de blocage 93. Dans cette position, le quartier 15 complètement détendu est suspendu par ses crochets 16a et 16b. Les roulettes 42a et 42b se trouvent de part et d'autre de la tête de centrage 62. Il est donc possible, comme c'était le cas au deuxième poste illustré sur les figures 8 et 9, de provoquer la descente de la tête de centrage 62 en agissant ici sur le vérin 33. Après cette opération, on actionne à nouveau en sens inverse le vérin 37 de façon à soulever l'organe de blocage 93. Puis on actionne les deux vérins d'extension 31 et 32 qui provoquent, par leurs pièces d'appui respectives 67,68, l'écartement des roulettes 42a,42b jusque dans la position illustrée sur la figure 14. Dans cette position, le quartier 15 se trouve à nouveau en position étendue comme c'était le cas au deuxième poste dans la position illustrée sur la figure 9.

Les opérations de traitement prévues au troisième poste sont alors effectuées pendant une durée prédéterminée par une temporisation et en particulier les opérations de dégraissage interne et certaines découpes. La figure 14 montre de manière schématique l'aspect du quartier 15 après décollement du collier basses-côtes de l'épaule.

Lorsque ces opérations sont terminées, on agit à nouveau sur les deux vérins d'extension 31 et 32 de façon à les remettre en position de repos, les pièces d'appui 67,68 venant en contact avec la pièce de centrage 62 qui reste en position basse comme illustré sur la figure 15. De par l'élasticité du quartier 15, les roulettes 42a et 42b se rapprochent en suivant pratiquement le mouvement des pièces d'appui 67,68. Il est donc possible d'abaisser à nouveau l'organe de blocage 93 en bloquant ainsi la roulette avant 42a comme illustré sur la figure 15 entre l'organe de blocage 93 et la pièce d'appui 67.

Dans certains cas, il est possible de séparer alors le quartier 15 en deux parties distinctes en accrochant l'ensemble sur le seul crochet avant 16a. Pour ce faire, on utilise tout d'abord un long crochet supplémentaire 105 qui est accroché dans le caparaçon 15a puis sur le crochet avant 16a. Un coup de couteau sur l'extrémité arrière du caparaçon 15a permet de dégager celui-ci du crochet arrière 16b. Les deux morceaux du quartier 15 à savoir, d'une part le caparaçon 15a et, d'autre part l'épaule décollée partiellement du colier basses-côtes formant l'ensemble 15b, se trouvent donc tous deux suspendus verticalement par le crochet avant 16a comme illustré sur la figure 16.

On actionne alors le vérin de blocage 36 de façon à rentrer la tige 103, libérant ainsi l'oeilleton de blocage 104 et la portion de rail 7a. Les deux vérins de soulèvement 34 et 35 sont actionnés jusqu'à ce que la portion de rail 7a occupe la position haute inclinée illustrée sur la figure 16. On notera qu'au cours du mouvement de translation vers le haut du rail 7a et de la poutre mobile 91, le vérin de blocage 37 a été continuellement actionné, de sorte que l'organe de blocage 93 a empêché tout mouvement de la roulette 42a et du crochet avant 16a maintenant les deux parties du quartier 15 suspendues verticalement sur le rail 7a. De la même manière, pendant ce mouvement, le vérin 33 a été continuellement actionné de façon à maintenir dans sa position basse la tête de centrage 62. La roulette 42b du crochet 16b a donc été maintenue par la pièce d'appui 68.

Après que la position haute illustrée sur la figure 16 ait été atteinte, on provoque l'ouverture de la butée de sécurité 94, puis par actionnement du levier de blocage 37, le dégagement de l'organe de blocage 93. Les deux parties du quartier 15 se déplacent alors par gravité sur la portion de rail incliné 7a et sont évacuées par le rail 9 vers les postes ultérieurs de l'installation afin de poursuivre le traitement du quartier et d'effectuer en particulier les opérations de prélèvement de muscles et de désossage encore nécessaires.

Après l'évacuation du quartier 15, on provoque le soulèvement de la tête de centrage 62 en agissant sur le levier 33, ce qui dégage la roulette 42b et le crochet 16b qui peut également être évacué par gravité par le rail 9 et revenir au début de l'installation par le rail de retour 13 (figure 1).

Les leviers de soulèvement 34 et 35 sont ensuite actionnés jusqu'à leur position de repos, remettant ainsi l'installation au troisième poste 4 dans la position basse prête à recevoir un nouveau quartier 15.

Dans la description d'un exemple d'installation qui vient d'être faite, on a principalement indiqué l'utilisation possible de vérins pneumatiques. On comprendra bien entendu que d'autres dispositifs pourraient être utilisés, par exemple des vérins hydrauliques ou autres actionneurs. Par ailleurs, on comprendra que l'installation pourrait être utilisée pratiquement sans modification pour traiter des quartiers arrières de bovins comme illustré sur la figure 4.

Le procédé de l'installation de l'invention permet d'effectuer de manière semi-automatisée la plupart des opérations d'apprêtage et de parage par dégraissage externe et interne des quartiers de bovins. Ces opérations s'effectuent dans la position optimale pour les opérateurs, soit en position verticale, soit en position horizontale suivant la portion traitée. Ces opérations s'effectuent avec une économie maximale de mouvement pour les opérateurs. Grâce à l'invention, on supprime en effet pratiquement la reprise ultérieure des muscles après désossage, puisque les opérations de dégraissage ont été effectuées initialement. On évite toutes les manutentions entraînées par les opérations de retournement des morceaux sur les tables de désossage qui étaient nécessaires autrefois en vue du dégraissage. Les opérations de parage se font sur de grandes surfaces, c'est-à-dire sur un ensemble de muscles et non pas muscle par muscle comme auparavant. Les quartiers sont maintenus fixés et en extension pendant les opérations de traitement, ce qui entraîne une grande stabilité et favorise ainsi considérablement le travail.

Les différents postes successifs de l'installation qui a été décrite peuvent travailler en série suivant une cadence gérée automatiquement par un automate programmable. Dans une autre variante, chaque poste peut être muni d'une temporisation indépendante, des quartiers pouvant être maintenus en attente devant chaque poste.

## Revendications

1. Procédé de traitement de quartiers avant ou arrière de viande de bovins ou autres quadrupèdes se présentant suspendus verticalement par un crochet pouvant se déplacer sur un assemblage de rails aériens devant une pluralité de postes de travail successifs, caractérisé par le fait qu'il comprend les étapes suivantes :

- on effectue un traitement préalable sur le quartier suspendu verticalement par un premier crochet mobile;

- on fait passer le quartier de sa position verticale initiale à une position inclinée par rapport à l'horizontale en utilisant un deuxième crochet mobile et on effectue un premier traitement sur le quartier maintenu bloqué dans cette position par le premier crochet et subissant une extension dans ces deux extrémités par l'effet de la gravité;

- on libère le premier crochet, le quartier se déplaçant alors par gravité, par entraînement manuel ou par entraînement mécanisé, en se plaçant en position horizontale;

- on provoque une extension du quartier en position horizontale en agissant sur les deux crochets sans toucher la viande et on effectue un deuxième traitement sur le quartier maintenu dans cette position;

- on déplace éventuellement, par entraînement manuel ou mécanisé, le quartier en position horizontale vers un ou plusieurs postes de traitement ultérieur.

2. Procédé de traitement selon la revendication 1, caractérisé par le fait qu'après extension du quartier en position horizontale obtenue par action sur les deux crochets, on effectue un traitement final comprenant la découpe du quartier en au moins deux portions, on attache les deux portions sur le même crochet, l'évacuation de l'ensemble étant assurée par gravité, par entraînement manuel ou par entraînement mécanisé.

3. Procédé de traitement selon la revendication 1 ou 2, caractérisé par le fait que le passage du quartier de sa position verticale initiale à sa position inclinée par rapport à l'horizontale déclenche une temporisation pour la durée du premier traitement et commande la cadence des traitements ultérieurs.

4. Procédé de traitement selon la revendication 1 ou 2, caractérisé par le fait que chaque traitement comporte une temporisation propre indépendante de celle des autres traitements.

5. Procédé de traitement selon l'une quelconque des revendications précédentes, adapté au traitement d'un quartier avant de viande de bovin, caractérisé par le fait que le traitement préalable consiste à retirer manuellement au couteau les aponévroses internes, la peau du caparaçon et le sternum;

que le premier traitement consiste à retirer manuellement au couteau la peau rouge sur plat et le nerf cervical;

que le deuxième traitement se fait manuellement en utilisant un couteau circulaire électrique et consiste en un apprêtage premettant la suppression des tampons de graisse et souillures diverses réalisant un parage préalable des faces externes du quartier;

et que le troisième traitement se fait manuellement au couteau et consiste à prélever une partie des muscles, à décoller l'épaule de l'ensemble collier-basses-côtes et à séparer totalement le caparaçon.

6. Procédé de traitement selon l'une quelconque des revendications 1 à 4, adapté au traitement d'un quartier arrière de bovin, caractérisé par le fait que le traitement préalable consiste à retirer manuellement au couteau les bavettes et à préparer le déhanchage;

que le premier traitement consiste à opérer un dégraissage des faces externes du quartier au couteau mécanique à lame circulaire;

que le deuxième traitement se fait manuellement au couteau et consiste à retirer les noix de graisse, ainsi que les graisses internes;

et que le troisième traitement consiste en une opération de déhanchage effectuée manuellement au couteau et une ou plusieurs opérations de sciage.

7. Installation de traitement de quartiers avant ou arrière de viande de bovins ou autres quadrupèdes se présentant suspendus verticalement à un premier crochet, comprenant un assemblage de rails aériens (6,7) à double chemin de roulement (6a,6b) sur lesquels peuvent se déplacer des crochets mobiles (16a,16b) devant une pluralité de postes de travail successifs (2, 3, 4, 5,), caractérisée par le fait qu'elle comprend un premier poste (2a adapté pour déplacer un deuxième crochet, accroché à l'extrémité inférieure du quartier suspendu, jusqu'à une position haute où le quartier se trouve sensiblement horizontal et au moins un poste de traitement présentant des moyens d'extension capables d'agir directement sur les crochets avant et arrière (16a, 16b) mettant en extension le quartier sensiblement horizontal sans toucher à la viande.

8. Installation de traitement selon la revendication 7, caractérisée par le fait que le premier poste (2) présente une portion de rail pivotante (11) pouvant occuper une position basse dans laquelle un crochet avant (16a) maintenu sur ladite portion de rail peut être accroché à l'extrémité inférieure du quartier (15) suspendu verticalement par un crochet arrière (16b), et une position haute inclinée par rapport à l'horizontale.

9. Installation selon les revendications 7 ou 8, caractérisée par le fait qu'elle comporte au moins un troisième poste (4,5) présentant une portion de rail (7a) pouvant subir une translation verticale et un pivotement ainsi que des moyens d'extension capables d'agir directement sur les crochets avant et arrière se trouvant sur ladite portion de rail de façon à placer le quartier (15) en extension sans toucher la viande.

10. Installation selon l'une quelconque des revendications 7 à 9, caractérisée par le fait que le rail aérien (6,7) sur lequel peuvent se déplacer les crochets devant le deuxième poste (3) et les postes suivants (4,5) de l'installation, est placé à un niveau inférieur à celui du rail (1) par lequel les quartiers sont amenés à l'installation et du rail - (9,10) par lequel ils sont évacués de l'installation, la portion de rail pivotante (11) du premier poste (2) permettant au quartier (15) de passer par gravité du niveau haut au niveau bas, tandis que la portion de rail (7a) pouvant subir une translation verticale au troisième poste (4,5) permet au quartier (15) de passer par gravité du niveau bas au niveau haut.

11. Installation selon la revendication 8, caractérisée par le fait que la portion de rail pivotante (11) du premier poste est suspendue par son extrémité libre à un câble (21) actionné par un vérin de levage (22).

12. Installation selon la revendication 11, caractérisée par le fait que le premier poste comprend en outre un vérin de blocage (23) du rail pivotant (11) en position haute.

13. Installation selon les revendications 11 ou 12, caractérisée par le fait que le premier poste comprend en outre un levier de blocage (44) du crochet, actionné par un vérin (24) et placé au voisinage d'extrémité libre du rail pivotant (11) ainsi qu'une butée (43) de maintien en position du crochet, placée à l'extrémité libre du rail pivotant (11).

14. Installation selon l'une quelconque des revendications 11 à 13, caractérisée par le fait que le premier poste comprend un capteur (59) de présence de crochets au voisinage du point d'articulation (48) du rail pivotant (11).

15. Installation selon l'une quelconque des revendications 11 à 13, caractérisée par le fait que le premier poste présente en outre un vérin de blocage (17) du crochet arrière.

16. Installation selon l'une quelconque des revendications 7 à 10, caractérisée par le fait que les moyens d'extension dont sont munis les postes suivant le premier poste de l'installation, comprennent : une tête de centrage (62) mobile verticalement entre une position haute et une position basse où un ergot de centrage (66) vient s'engager entre les deux chemins de roulement du rail; deux vérins d'extension (27,28; 31,32) disposés de part et d'autre du rail, chaque vérin d'extension comportant un cylindre articulé en un point fixe situé au niveau du rail, et une tige articulée sur la tête de centrage (62), l'extrémité de la tige étant en outre munie d'une pièce d'appui (67,68) capable d'exercer une poussée sur l'un des crochets (16a,16b) du quartier sans toucher la viande.

17. Installation selon la revendication 16, caractérisée par le fait qu'un manchon en U (73,74) solidaire de l'extrémité de la tige de chaque vérin d'extension, vient enserrer avec jeu l'une des extrémités latérales (69,70) de la tête de centrage - (62) de façon que le mouvement vertical vers le haut de la tête de centrage entraîne également vers le haut les côtés tiges des deux vérins d'extension (27,28) et les deux pièces d'appui (67,68), dégageant ainsi le rail.

18. Installation selon la revendication 17, caractérisée par le fait que les pièces d'appui (67,68) comportent un ergot de centrage (82,83) et une portée (71,72) venant en contact avec une portée correspondante de la tête de centrage (62).

19. Installation selon l'une quelconque des revendications 16 à 18, caractérisée par le fait que la tige de chaque vérin d'extension est fixée sur sa pièce d'appui respective (67,68) sensiblement en son centre, l'une des extrémités de la pièce d'appui étant adaptée pour entrer en contact avec le crochet, l'autre extrémité (86,87) étant guidée dans une glissière latérale (88,89) lors du mouvement d'extension.

20. Installation selon l'une quelconque des revendications 16 à 19, caractérisée par le fait que le mouvement de la tête de centrage (62) est commandé par un vérin (29,33) piloté de façon que la tête de centrage (62) soit abaisée avant que les deux vérins d'extension ne soient actionnées.

21. Installation selon la revendication 9, caractérisée par le fait que la portion de rail (7a) pouvant subir une translation verticale est solidaire d'une poutre mobile (91) sur laquelle sont également montés les moyens d'extension, la poutre (91) étant articulée à ses deux extrémités (97) à des tirants (98,99) pouvant être déplacés par deux vérins de soulèvement (34,35) de course différente.

22. Installation selon la revendication 21, caractérisée par le fait que le troisième poste comprend en outre un vérin (36) de blocage en position basse de la portion de rail (7a).

FIG.1

# FIG.2

0 198 329

FIG.3

FIG.4

FIG.5

# FIG.6

0 198 329

# FIG.7

0 198 329

# FIG.8

# FIG.9

0 198 329

# FIG.10

0 198 329

## FIG.11

## FIG.13

# FIG.12

0 198 329

FIG.14

# FIG.15

0 198 329

# FIG.16

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-B-1 025 749 (BANSS)<br><br>* En entier *<br><br>--- | 1,2,7,<br>8,15 | A 22 B 7/00 |
| A | US-A-2 883 700 (LIEBMANN)<br>* Colonne 3, ligne 52 - colonne 4, ligne 39; colonne 7, ligne 72 - colonne 8, ligne 31 *<br><br>--- | 3,7 | |
| A | DE-C- 139 143 (PENIGER)<br><br>--- | | |
| A | CH-A- 317 435 (STOHRER)<br><br>--- | | |
| A | US-A-3 031 715 (RISTOW)<br><br>--- | | DOMAINES TECHNIQUES RECHERCHES (Int. Cl.4) |
| A | FR-A-2 093 160 (PAWELA)<br><br>--- | | A 22 B<br>A 22 C |
| A | DE-A-1 782 675 (STOHRER)<br><br>----- | | |

Le présent rapport de recherche a été établi pour toutes les revendications

| Lieu de la recherche | Date d'achèvement de la recherche | Examinateur |
|---|---|---|
| LA HAYE | 25-06-1986 | DE LAMEILLIEURE D. |